# EUROPÄISCHE PATENTSCHRIFT

(11) **EP 1 498 370 B1**
(45) Veröffentlichungstag und Bekanntmachung des Hinweises auf die Patenterteilung: **03.05.2006**
(21) Anmeldenummer: 04405434.4
(22) Anmeldetag: 08.07.2004
(51) Int. Cl.: B65G 47/244, B65G 13/02

(54) **Vorrichtung zum Drehen eines Gegenstandes**
Device for orienting articles
Dispositif pour orienter des articles

(30) Priorität: 17.07.2003 CH 12512003
(43) Veröffentlichungstag der Anmeldung: 19.01.2005
(73) Patentinhaber: ROBERT BOSCH GMBH, 70442 Stuttgart (DE)
(72) Erfinder: Meyer, Peter, 8222 Beringen (CH)
(74) Vertreter: Clerc, Natalia

(56) Entgegenhaltungen:
- US-A- 6 126 383
- US-A1- 2003 234 155
- PATENT ABSTRACTS OF JAPAN Bd. 0082, Nr. 67 (M-343), 7. Dezember 1984 (1984-12-07) & JP 59 138519 A (SHIGUNOODO KK), 9. August 1984 (1984-08-09)
- PATENT ABSTRACTS OF JAPAN Bd. 1998, Nr. 03, 27. Februar 1998 (1998-02-27) & JP 9 286515 A (ISHII IND CO LTD), 4. November 1997 (1997-11-04)

## Beschreibung

### Technisches Gebiet

Die Erfindung betrifft eine Vorrichtung zum Drehen eines Gegenstandes gemäss Oberbegriff des Patentanspruchs 1. Die Vorrichtung eignet sich insbesondere zum Transport und Drehen von Behältern, beispielsweise Schachteln.

### Stand der Technik

DE-A-39'15'246 offenbart eine Vorrichtung zur Förderung von Gegenständen, in welcher die Gegenstände während der Förderung kontrolliert um eine Achse senkrecht zur Förderbahn gedreht werden. Hierfür sind drehbare Träger vorhanden, auf welchen die zu drehenden Gegenstände angeordnet sind.

In DE-A-199'48'704 wird ein Drehteller verwendet, um Papierstapel während ihres Transports zu drehen.

EP-A-0'4'72'984 offenbart eine Förder- und Drehvorrichtung mit zwei übereinander angeordneten Förderbändern. Auf dem unteren Förderband, welches mit Mitnehmern versehen ist, wird ein zu drehender, runder Gegenstand transportiert. Am oberen Förderband sind nach unten ragende Kulissen vorhanden, welche den Gegenstand in seiner Position halten. Ferner sind zwei seitliche Bänder vorgesehen, welche an zwei gegenüberliegenden Stellen des runden Gegenstandes angreifen. Die Gegenstände werden gedreht, indem die zwei seitlichen Bänder mit unterschiedlichen Geschwindigkeiten angetrieben werden.

Diese Vorrichtungen weisen den Nachteil auf, dass sie an die Form und Grösse der zu transportierenden Gegenstände angepasst sein müssen.

Ferner sind aus DE-A-30'16'940 und EP-0'399'264 Vorrichtungen mit seitlichen Förderbändern bekannt, welche die zu drehenden Gegenstände einklemmen und diese durch unterschiedliche Fördergeschwindigkeiten drehen.

Diese oben genannten Vorrichtungen weisen alle den Nachteil auf, dass sie ebenfalls auf die jeweilige Grösse und Form der Gegenstände angepasst sein müssen. Zudem müssen jeweils die Haft- und Gleitreibung sowie der Anpressdruck optimiert sein, damit die Gegenstände genügend positionsgenau gedreht werden können.

Ferner sind Transporttische bekannt, welche Gegenstände drehen können. Hauptsächlich werden die Transporttische dazu verwendet, um die Gegenstände an Kreuzungen und Abzweigungen in die gewünschte Richtung zu drehen. Dies ist beispielsweise in DE-A-1'198'735 und US-A-3'552'541 offenbart. Weitere Tische mit Allseitenrollen sind in US-A-5'082'109, FR-A-2'798'122 und DE-A-2'202'256 beschrieben.

Derartige Allseitenrollen sind seit langem bekannt, beispielsweise in US-A-3'363'735, US-A-3'621'961, JP 2000335726 und DE-A-502'510.

Eine Vorrichtung mit den Merkmalen des Oberbegriffs des Anspruchs 1 ist aus der US 6,126,383 bekannt. Diese Druckschrift zeigt eine Vorrichtung mit drei parallel nebeneinander angeordneten angetriebenen Transportbändern zum Drehen von Kartons, die in der Draufsicht eine sehr viel längere und eine schmalere Seite aufweisen. Das mittlere Band gibt die Transportgeschwindigkeit vor, während das eine seitliche Band schneller und das andere seitliche Band langsamer als das mittlere Band angetrieben werden. Nicht ausgerichtete zu drehende Gegenstände werden neben der Auflage auf dem mittleren Band auch teilweise auf einem der seitlichen Bänder aufliegen, so dass durch den Geschwindigkeitsunterschied zwischen den beiden Bändern eine Drehung des Gegenstandes erreicht wird. Wenn dann durch diese Drehung eine gegenüberliegende Ecke des zu drehenden Gegenstandes auch auf dem dritten Band zu liegen kommt, so wird sich durch den gegenteiligen Geschwindigkeitsunterschied die Drehung noch beschleunigen. Diese Vorrichtung weist einen sehr aufwendigen Aufbau auf und ist nicht für verschiedenste Arten von zu drehenden Gegenständen geeignet.

### Darstellung der Erfindung

Es ist eine Aufgabe der Erfindung, eine Vorrichtung zu schaffen, welche eine möglichst positionsgenaue Drehung ermöglicht und für Gegenstände mit unterschiedlichen Formen und Grössen einsetzbar ist.

Diese Aufgabe löst eine Vorrichtung mit den Merkmalen des Patentanspruchs 1.

Die erfindungsgemässe Vorrichtung zum Drehen eines Gegenstandes weist in einer Auflageebene angeordnete Mittel zur Auflage einer Bodenfläche des zu transportierenden Gegenstandes auf. Das Drehen des Gegenstandes erfolgt um eine senkrecht zu dieser Auflageebene verlaufenden Achse. Es sind mindestens zwei sich in Transportrichtung erstreckende, mindestens annähernd parallel zueinander verlaufende Förderer vorhanden. Dabei ist mindestens ein erster dieser Förderer antreibbar, so dass er mindestens den auf dem zugehörigen Mittel aufliegenden Teil des Gegenstandes in Transportrichtung transportiert. Dieser erste Förderer weist eine bezüglich der anderen Förderer unterschiedliche Transportgeschwindigkeit auf. Die Mittel zur Auflage des Gegenstandes sind Bestandteil der Förderer. Diese Mittel haben bezüglich der Auflageebene richtungsabhängige Reibungskoeffizienten, welche insbesondere in Transportrichtung grösser sind als in der dazu senkrechten und in der Transportebene verlaufenden Richtung. In Transportrichtung kommt Haft- oder Gleitreibung zur Wirkung; senkrecht dazu ist Rollreibung wirksam.

Da die Gegenstände lediglich auf die Förderer aufgelegt werden und keine weiteren speziell der Form und Grösse der Gegenstände angepasste Drehmittel notwendig sind, lässt sich die Vorrichtung ohne konstruktive Änderungen für unterschiedliche Gegenstände verwenden. Da die Gegenstände nicht zwischen Halterungen eingeklemmt werden müssen, lassen sich auch diffizile Gegenstände sicher transportieren und drehen. Zudem ist die für die Drehung benötigte Kraft minimiert.

Vorteilhaft ist ferner, dass die Vorrichtung relativ wenig Elemente benötigt und somit einfach und kostengünstig herstellbar ist.

Die Gegenstände lassen sich mit denselben Mitteln sowohl effizient entlang einer Strecke transportieren wie auch gleichzeitig mit genügender Positionsgenauigkeit um eine Achse senkrecht zur Transportebene drehen. Dies ermöglicht ein reibungsarmes Drehen. Zudem wird die Transportzeit des Gegenstandes durch seine Drehung nicht verzögert.

Die Effizienz des Transports bzw. der Drehung lässt sich zudem steigern, indem mindestens zwei der Förderer angetrieben sind, so dass zusätzlich zu der für die Drehbewegung notwendigen Geschwindigkeitsdifferenz eine gemeinsame Geschwindigkeitskomponente vorhanden ist, welche den Gegenstand bereits während der Drehung vorwärts transportiert. Die Förderer dienen somit als Längs- wie auch als Drehförderer.

Es ist jedoch auch möglich, dass lediglich einer der Förderer angetrieben ist und somit lediglich eine Drehung ausgeführt wird. Ferner ist es möglich, dass einer der Förderer den Gegenstand in Vorwärtsrichtung und ein anderer Förderer in Rückwärtsrichtung bewegt, so dass der Gegenstand am Ort gedreht wird. Der Vorwärtstransport des Gegenstandes findet in diesen zwei Fällen durch andere, bekannte Mittel, beispielsweise Schieber, seitliche Förderbänder oder an die erfindungsgemässen Förderer angrenzende Fördermittel statt.

Vorzugsweise weist jeder Förderer mehrere derartige Mittel auf, wobei die Mittel in Transportrichtung einzeln oder in Gruppen hintereinander angeordnet sind und Rollen aufweisen. Vorzugsweise weist jede dieser Rollen eine Drehachse auf, welche mindestens im Zustand, in welchem die Rolle die Bodenfläche des Gegenstandes kontaktiert, mindestens annähernd parallel zur Transportrichtung verläuft. Vorzugsweise ist die Rolle um diese Drehachse frei drehbar.

In einer bevorzugten Ausführungsform sind die Rollen in Käfigen gehalten, welche um eine Achse senkrecht zur Transportrichtung drehbar sind. Vorzugsweise sind diese Käfig/Rollen-Gebilde Allseitenrollen.

In einer anderen bevorzugten Ausführungsform sind die Kontaktierungsmittel einzelne Längsrollen, welche an einem strangförmigen Zugmittel in Transportrichtung hintereinander angeordnet sind.

Die Positionsgenauigkeit lässt sich durch Ausrichtemittel, welche in Transportrichtung nach den Längs- und Drehförderern angeordnet sind, erhöhen. Derartige Ausrichtemittel sind beispielsweise seitliche Führungen und/oder sepparat angetriebene und bewegliche Stopperelemente.

Weitere vorteilhafte Ausführungsformen gehen aus den abhängigen Patentansprüchen hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, erläutert. Es zeigen:
- Figur 1: eine perspektivische Ansicht der erfindungsgemässen Vorrichtung gemäss einer ersten Ausführungsform;
- Figur 2: einen Ausschnitt der Vorrichtung gemäss Figur 1 mit darauf angeordneten Schachteln;
- Figur 3: eine perspektivische Ansicht eines Teils der Vorrichtung gemäss Figur 1 mit dargestelltem Antrieb und Allseitenrollen;
- Figur 4a: eine perspektivische Ansicht einer Allseitenrolle;
- Figur 4b: eine Ansicht auf die Allseitenrolle gemäss Figur 4a von oben;
- Figur 4c: eine Seitenansicht der Allseitenrolle gemäss Figur 4a;
- Figur 5: eine perspektivische Ansicht der erfindungsgemässen Vorrichtung gemäss einer zweiten Aüsführungsform und
- Figur 6: eine perspektivische Ansicht der wesentlichen Teile der erfindungsgemässen Vorrichtung gemäss einer dritten Ausführungsform.

### Wege zur Ausführung der Erfindung

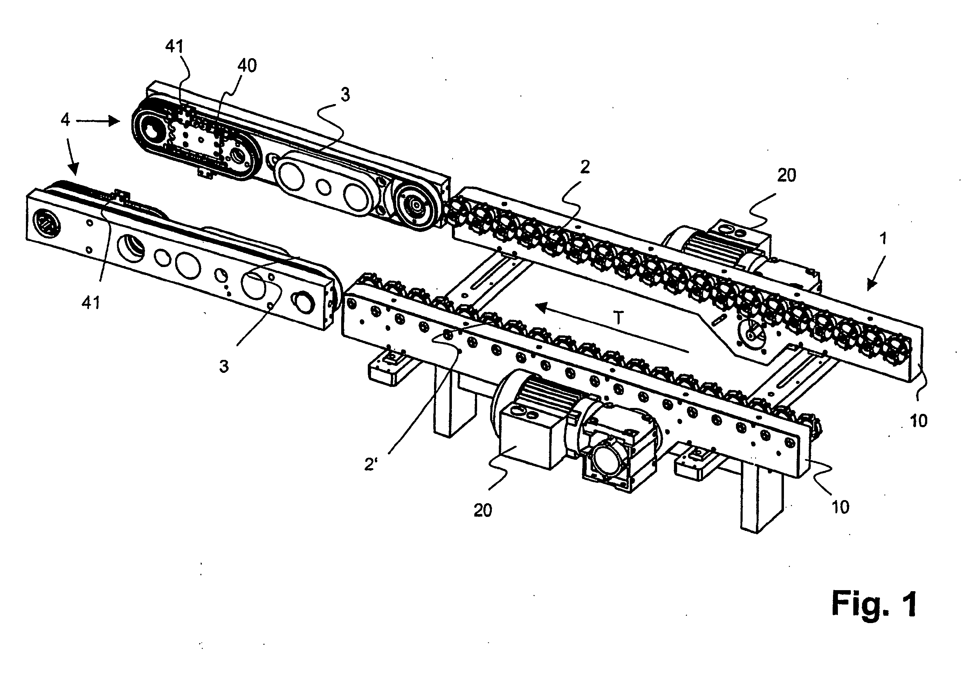

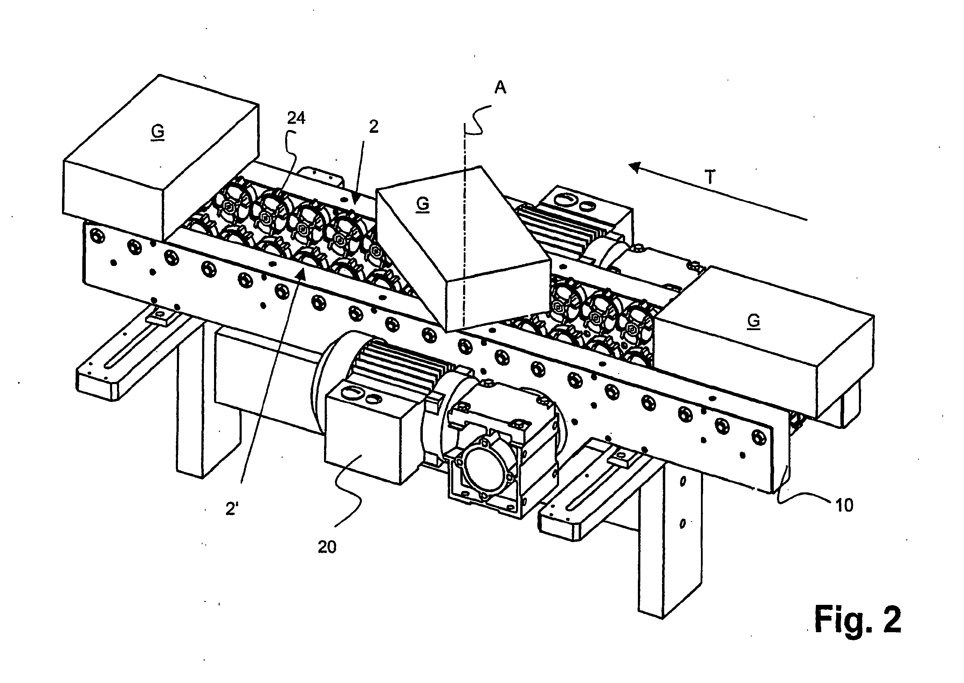

In Figur 1 ist ein erstes Ausführungsbeispiel der erfindungsgemässen Vorrichtung dargestellt. An zwei beabstandeten Seitenwangen 10 eines Rahmengestells 1 sind zwei Längs- und Drehförderer 2, 2' angeordnet. Diese Längs- und Drehförderer 2, 2' erstrecken sich entlang einer Transportrichtung T, welche mit einem Pfeil dargestellt ist. Die entsprechende Dreh- und Transportebene für die in Figur 2 dargestellten, zu transportierenden und drehenden Gegenstände G verläuft somit vorzugsweise horizontal.

Anschliessend an die Längs- und Drehförderer 2, 2' ist ein horizontaler Förderer 3 angeordnet. Er kann auf demselben oder einem anderen Rahmengestell 1 angeordnet sein. Im Bereich des horizontalen Förderers 3 ist vorzugsweise ein Ausrichtemittel, hier ein Anschlagmittel 4 vorhanden.

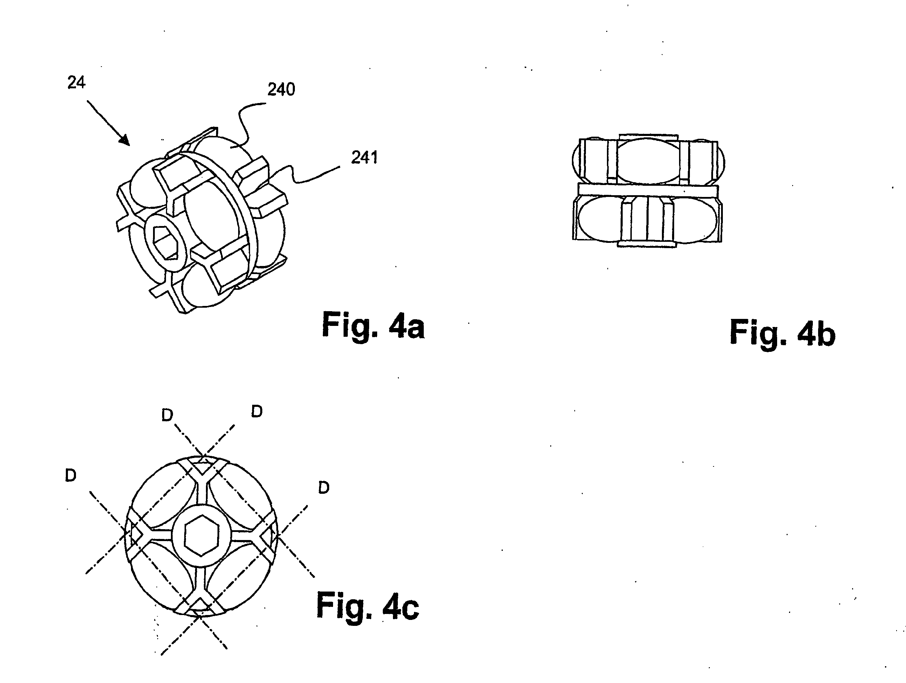

Im hier dargestellten Beispiel wird jeder der Längs- und Drehförderer 2, 2' durch mehrere Allseitenrollen 24 gebildet, welche einzeln in Transportrichtung T hintereinander angeordnet sind. Es ist jedoch auch möglich, dass sie gruppenweise hintereinander angeordnet sind. Derartige Allseitenrollen 24 sind im Stand der Technik bekannt. Hier wird lediglich eine mögliche Ausführungsform davon beschrieben. Sie weisen, wie in den Figuren 4a bis 4c dargestellt, einen Käfig 241 auf, in welchem bombierte längliche Rollen 240 gehalten sind. Die Rollen 240 sind gleichmässig über den Umfang des Käfigs 241 verteilt und lassen sich frei um Drehachsen D drehen. Vorzugsweise werden für die erfindungsgemässe Vorrichtung, wie hier dargestellt, zweireihige Allseitenrollen verwendet, bei welchen die Rollen 240 der zwei Reihen um einen Winkel versetzt zueinander angeordnet sind. Dadurch ist gewährleistet, dass der Gegenstand bei jeder Drehposition des Käfigs 241 auf einer Rolle 240 aufliegt. Die hier verwendeten Allseitenrollen 24 weisen bezüglich der Auflageebene richtungsabhängige Reibungskoeffizienten auf, wobei diese Reibungskoeffizienten vorzugsweise in Transportrichtung T grösser sind als diejenigen in einer dazu senkrechten Richtung S. Es ist beispielsweise auch möglich, zwei einfache Allseitenrollen im einen Winkel verdreht auf einer gemeinsamen Drehachse nebeneinander anzuordnen.

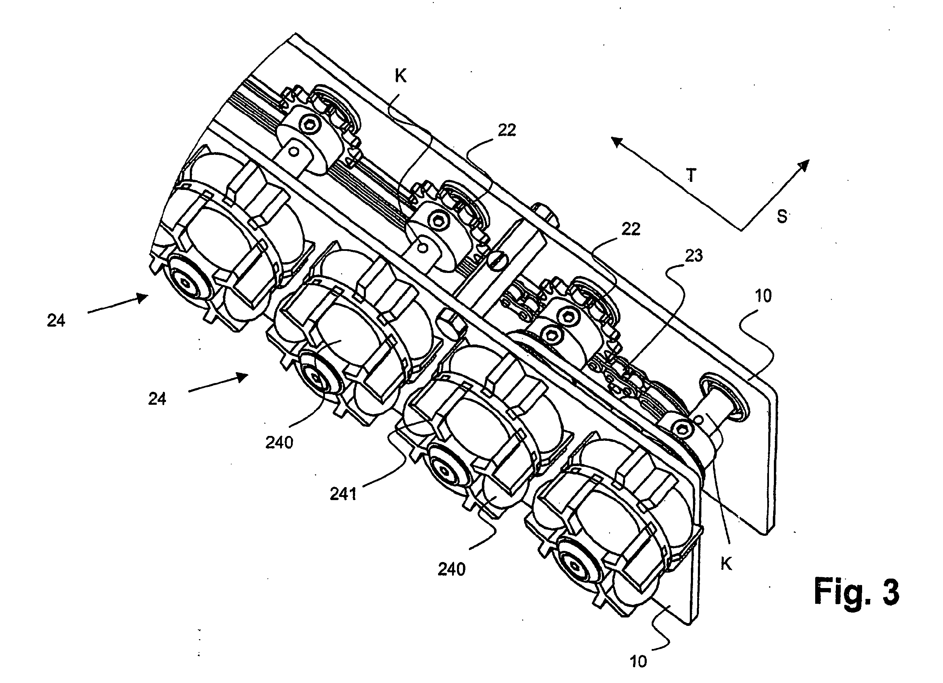

Wie in Figur 3 erkennbar ist, sind die hintereinander angeordneten Allseitenrollen 24 beziehungsweise ihre Käfige 241 auf einer jeweiligen Welle angeordnet, welche die Drehachse K für die Käfige definiert. Diese Drehachsen K verlaufen parallel zur Auflageebene, aber senkrecht zur Transportrichtung T. Die Wellen sind gemeinsam angetrieben. Jeder Förderer 2, 2' weist einen eigenen Antrieb auf. Die Wellen jedes Förderers 2, 2' sind über ein gemeinsames Antriebsmittel, hier eine umlaufende Antriebskette 23, miteinander verbunden. Die Kette 23 greift in mehrere Getriebe 22 ein, welche je mit einer der Achsen K verbunden sind. Die Kette 23 und die Getriebe 22 sind vorzugsweise in den Seitenwangen 10 angeordnet. Jede Kette 23 ist mit einem eigenen Antriebsmotor 20 verbunden, welcher in Figur 1 dargestellt ist. Somit weist jeder Förderer 2, 2' einen eigenen Antrieb auf.

In Figur 2 ist erkennbar, wie mittels der erfindungsgemässen Vorrichtung ein Gegenstand G, hier eine Schachtel, gedreht und gleichzeitig transportiert wird. Dies erfolgt, indem die zwei Förderer 2, 2' unterschiedlich angetrieben werden, so dass sie unterschiedliche Transportgeschwindigkeiten aufweisen. Das heisst somit, dass die zu einem gemeinsamen Förderer 2, 2' gehörigen Käfige 241 mit gleicher Geschwindigkeit um die Drehachse K gedreht werden, wobei die Käfige 241 unterschiedlicher Förderer 2, 2' unterschiedliche Rotationsgeschwindigkeiten aufweisen. Da die Schachtel auf den Rollen 241 aufliegt und deren Drehachsen D in diesem kontaktierenden Zustand parallel zur Transportrichtung T verlaufen, wird die Schachtel um eine Achse A senkrecht zur Auflageebene gedreht und gleichzeitig vorwärts transportiert. Der erzielte Drehwinkel hängt von der Relativgeschwindigkeit der Förderer 2, 2' ab. Hier wurde die Schachtel um 90° gedreht. Durch entsprechende Steuerung der Antriebe der Förderer 2, 2' lassen sich aber beliebige Drehwinkel erzielen.

Der Gegenstand G lässt sich nach seiner Drehung noch genauer ausrichten. Hierfür ist in Figur 1 das Anschlagmittel 4 vorhanden. Es weist zwei parallel zueinander verlaufende, vorzugsweise synchron angetriebene umlaufende Förderketten 40 und mindestens ein fest mit der Förderkette 40 verbundenes Anschlagelement 41 auf. Vorzugsweise sind zwei oder mehrere Anschlagelemente 41 vorhanden. Der gedrehte Gegenstand verlässt nach seiner Drehung die Förderer 2, 2' und gelangt stromabwärts auf den horizontalen Förderer 3, welcher hier durch zwei parallel verlaufende, vorzugsweise synchron angetriebene Förderbänder gebildet ist. Die im für den Gegenstand gewünschten Drehwinkel zueinander angeordneten Anschlagelemente 41 dienen als Anschlag für die ankommende Schachtel und richten diese gegebenenfalls noch vollständig aus.

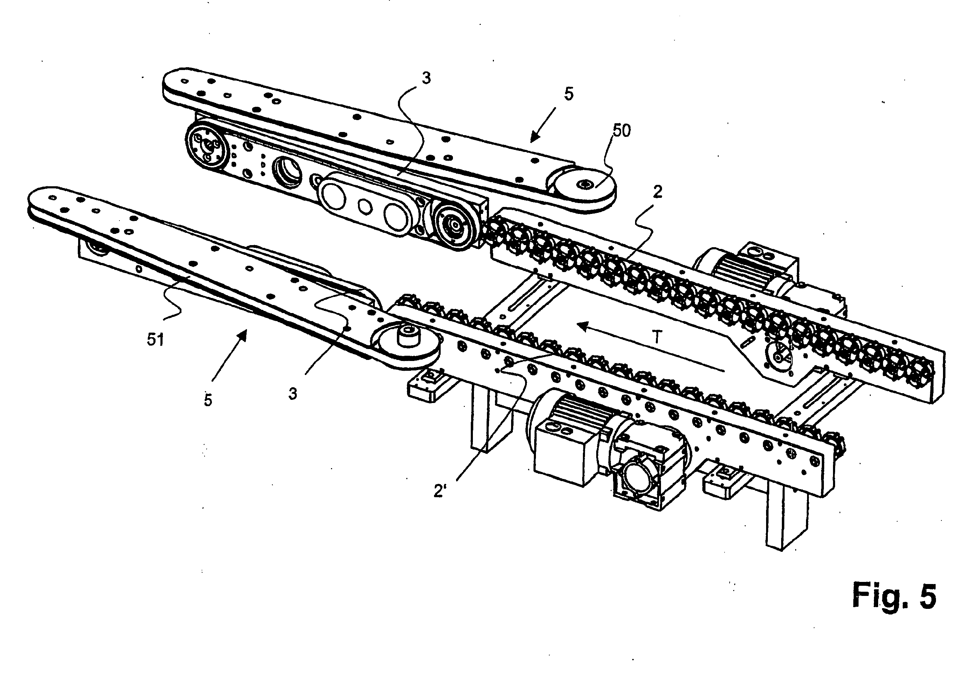

Eine andere Art der Ausrichtung ist in Figur 5 dargestellt. Hier ist als Ausrichtemittel ein seitliches Führungsmittel 5 vorhanden. Dieses weist je ein auf je einer Seite der Transportstrecke angeordnetes seitliches Förderband 51 auf, welches um eine Antriebsrolle 50 und eine Umlenkrolle läuft. Diese zwei Förderbänder 51 nehmen die Schachtel auf und richten sie nochmals aus. Je nach Art der Gegenstände erübrigt sich in diesem Fall der horizontale Förderer 3. Es ist jedoch auch möglich, das seitliche Führungsmittel 5 gemeinsam mit dem oben beschriebenen Anschlagmittel 4 zu verwenden.

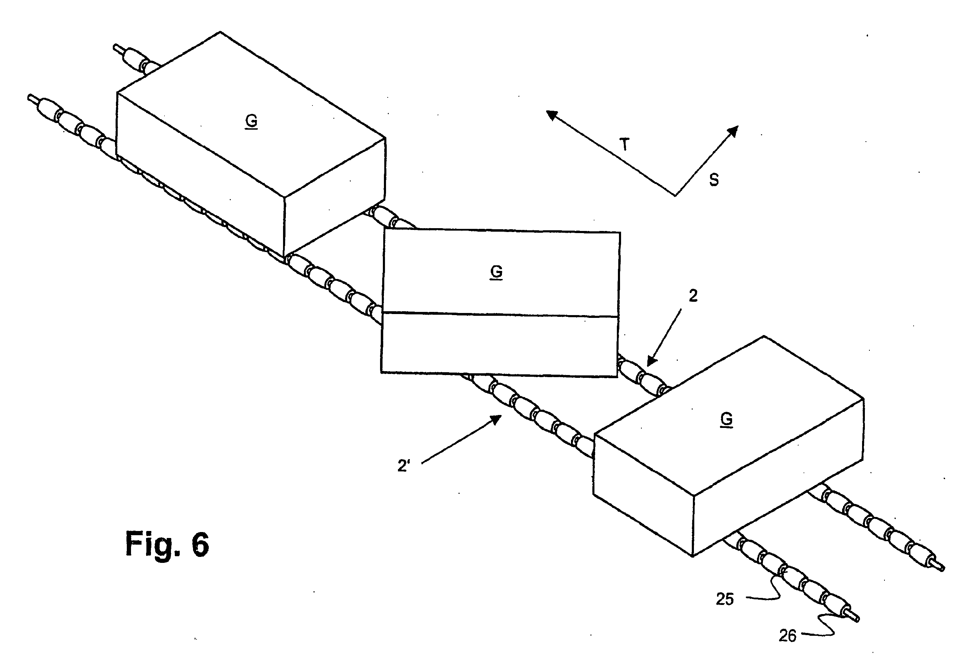

In Figur 6 ist ein weiteres Ausführungsbeispiel der erfindungsgemässen Vorrichtung dargestellt. Hier werden anstelle von Allseitenrollen bombierte Längsrollen 25 verwendet, welche an einem umlaufenden strangförmigen Zugmittel 26, beispielsweise einem Drahtseil, lagefiziert, aber um ihre Längsachse D frei drehbar angeordnet sind. In Figur 6 ist nur das obere Trum des Zugmittels 26 dargestellt. Das Zugmittel 26 läuft in bekannter Art und Weise um eine Umlenkrolle um und wird von einer Antriebsrolle angetrieben. Wie hier dargestellt ist, weist jeder Längs- und Drehförderer 2, 2' genau ein Zugmittel 26 auf. Es ist jedoch auch möglich, zwei oder mehrere Zugmittel 26 nebeneinander anzuordnen und sie gemeinsam anzutreiben. Wie in den oben beschriebenen Ausführungsformen werden auch hier die Zugmittel 26 der zwei Förderer 2, 2' mit unterschiedlichen Transportgeschwindigkeiten zur Förderung der Schachteln G versehen. Der Vorwärtstransport erfolgt dadurch, dass die Zugmittel in Transportrichtung T umlaufen. Die Drehung erfolgt dank der Relativgeschwindigkeit zwischen den zwei Förderern 2, 2' und den frei drehbaren Längsrollen 25. Auch hier weisen deshalb die Längsrollen 25 bezüglich der Auflageebene richtungsabhängige Reibungskoeffizienten auf, wobei diese Reibungskoeffizienten vorzugsweise in Transportrichtung T grösser sind als diejenigen in der dazu senkrechten Richtung S.

Die erfindungsgemässe Vorrichtung ermöglicht somit auf einfache Art und Weise eine Drehung sowie einen Transport von Gegenständen, wobei die Vorrichtung kaum der Form und Grösse der Gegenstände angepasst werden muss.

### Bezugszeichenliste

- G: Gegenstand
- T: Transportrichtung
- S: in der Transportebene und senkrecht zur Transportrichtung verlaufende Richtung
- A: Drehachse des Gegenstandes
- D: Drehachse der Rolle
- K: Drehachse des Käfigs .

- 1: Rahmengestell
- 10: Seitenwangen
- 2: Erster Längs- und Drehförderer
- 2': Zweiter Längs- und Drehförderer
- 20: Antriebsmotor
- 22: Getriebe
- 23: Antriebskette
- 24.: Allseitenrolle
- 240: Rolle
- 241: Käfig
- 25: Längsrolle
- 26: Strangförmiges Zugmittel
- 3: Horizontaler Förderer
- 4: Anschlagmittel
- 40: Förderkette
- 41: Anschlagelement
- 5: Seitliches Führungsmittel
- 50: Antriebsrolle
- 51: Seitliches Förderband

## Patentansprüche

1. Vorrichtung zum Drehen eines Gegenstandes (G) um eine senkrecht zu einer Auflageebene verlaufenden Achse (A), wobei mindestens zwei Förderer (2, 2') vorhanden sind, sich die mindestens zwei Förderer (2, 2') entlang einer Transportrichtung (T) erstrecken und beabstandet mindestens annähernd parallel zueinander verlaufen, wobei mindestens ein erster der Förderer (2, 2') antreibbar ist, um mindestens den Bereich des auf ihm aufliegenden Gegenstandes in Transportrichtung (T) zu transportieren, wobei der erste Förderer (2, 2') eine bezüglich der anderen Längs- und Drehförderer (2, 2') beziehungsweise bezüglich des anderen Längs- und Drehförderers (2, 2') unterschiedliche Transportgeschwindigkeit aufweist, **dadurch gekennzeichnet, dass** die Förderer (2, 2') mehrere in der Auflageebene angeordnete Rollen (240, 25) zur Auflage der Bodenfläche des Gegenstandes (G) aufweisen, die in Transportrichtung (T) einzeln oder in Gruppen hintereinander angeordnet sind, wobei jede der Rollen (240, 25) eine Drehachse (D) aufweist, welche mindestens in einem die Bodenfläche kontaktierendem Zustand dieser Rolle (240, 25) mindestens annähernd parallel zur Transportrichtung (T) verläuft.

2. Vorrichtung nach Anspruch 1, **dadurch gekennzeichnet, dass** die Rollen (240, 25) bezüglich der Auflageebene richtungsabhängige Reibungskoeffizienten aufweisen, wobei diese Reibungskoeffizienten insbesondere in Transportrichtung (T) grösser sind als diejenigen in einer dazu senkrechten Richtung (S), welche in der Auflageebene verläuft.

3. Vorrichtung nach Anspruch 1, **dadurch gekennzeichnet, dass** mindestens ein zweiter der Förderer (2, 2') antreibbar ist, wobei dieser eine vom ersten Förderer (2, 2') unterschiedliche Transportgeschwindigkeit aufweist.

4. Vorrichtung nach einem der vorstehenden Ansprüche, **dadurch gekennzeichnet, dass** die Rollen (240) einzeln oder gruppenweise in Käfigen (241) angeordnet sind und dass die Käfige (241) Drehachsen (K) aufweisen, welche mindestens annähernd senkrecht zur Transportrichtung (T) angeordnet sind.

5. Vorrichtung nach Anspruch 4, **dadurch gekennzeichnet, dass** jeder Förderer (2, 2') mehrere Käfige (241) aufweist, wobei die Käfige (241) jedes der Förderer (2, 2') in Transportrichtung (T) einzeln oder paarweise hintereinander angeordnet sind.

6. Vorrichtung nach Anspruch 5, **dadurch gekennzeichnet, dass** die hintereinander angeordneten Käfige (241) jedes Förderers (2, 2') mit gleicher Geschwindigkeit, insbesondere gemeinsam, angetrieben sind.

7. Vorrichtung nach einem der Ansprüche 5 oder 6, **dadurch gekennzeichnet, dass** mehrere Rollen (240) über einen Umfang des Käfigs (241) verteilt angeordnet sind, wobei jede Rolle (241) eine Drehachse (D) aufweist, welche im die Bodenfläche kontaktierenden Zustand dieser Rolle (240) parallel zur Transportrichtung (T) verläuft.

8. Vorrichtung nach einem der vorstehenden Ansprüche, **dadurch gekennzeichnet, dass** Allseitenrollen (24) vorhanden sind und dass die Rollen (240) Bestandteil der Allseitenrollen (24) sind.

9. Vorrichtung nach Anspruch 8, **dadurch gekennzeichnet, dass** mindestens zwei Allseitenrollen (24) nebeneinander angeordnet sind und zwei Reihen bilden beziehungsweise dass eine zweireihige Allseitenrolle (24) vorhanden ist, und dass die Rollen (240) jeder Reihe identisch ausgebildet, aber um einen Winkel verdreht zueinander angeordnet sind.

10. Vorrichtung nach einem der Ansprüche 1 bis 3 oder 9, **dadurch gekennzeichnet, dass** die Rollen Längsrollen (25) sind, welche in Transportrichtung hintereinander auf einem strangförmigen umlaufenden Zugmittel (26) angeordnet sind, wobei die Längsrollen (25) drehbar und in Transportrichtung (T) unverschiebbar auf dem Zugmittel (26) angeordnet sind, wobei ihre Drehachsen (D) parallel zur Transportrichtung verlaufen und wobei jeder Förderer (2, 2') mindestens ein derartiges Zugmittel (26) aufweist.

11. Vorrichtung nach einem der Ansprüche 1 bis 10, **dadurch gekennzeichnet, dass** im den Förderern (2, 2') in Transportrichtung (T) nachfolgenden Bereich ein Ausrichtemittel zur positionsgenauen Ausrichtung des Gegenstandes vorhanden ist, wobei das Ausrichtemittel insbesondere ein Anschlagelement (41) aufweist und/oder ein seitliches Führungsmittel (5) ist.

## Claims

1. Apparatus for rotating an article (G) around an axis (A) running perpendicularly to the bearing plane, wherein at least two conveyors (2, 2') are present, the at least two conveyors (2, 2') extending along a transporting direction (T) and being spaced apart at least more or less parallel to one another, wherein at least a first of the conveyors (2, 2') can be driven, in order for at least that region of the article which rests on it to be transported in the transporting direction (T), wherein the first conveyor (2, 2') having a transporting speed which is different from that of the other longitudinal and rotary conveyors (2, 2') and of the other longitudinal and rotary conveyor (2, 2') respectively, **characterized in that** the conveyors (2, 2') have several rollers (240, 25) arranged in the bearing plane for bearing the base surface of the article (G), which are arranged in transporting direction (T) individually or in groups one behind the other, wherein each of the rollers (240, 25) has an axis of rotation (D), which runs at least in a state in which said roller (240, 25) is in contact with the base surface at least more or less parallel to the transporting direction (T).

2. Apparatus according to claim 1, **characterized in that** the rollers (240, 25) show direction-dependent coefficients of friction in respect of the bearing plane, wherein these coefficients of friction being greater, in particular, in the transporting direction (T) than those in a direction (S) which is perpendicular thereto, and runs in the bearing plane.

3. Apparatus according to claim 1, **characterized in that** at least a second of the conveyors (2, 2') can be driven, wherein this conveyor has a transporting speed which is different from that of the first conveyor (2, 2').

4. Apparatus according to any of the preceding claims, **characterized in that** the rollers (240) are arranged individually or in groups in cages (241), and **in that** the cages (241) have axes of rotation (K) which are arranged at least more or less perpendicularly to the transporting direction (T).

5. Apparatus according to claim 4, **characterized in that** each conveyor (2, 2') has a plurality of cages (241), wherein the cages (241) of each of the conveyors (2, 2') being arranged individually or in pairs one behind the other in the transporting direction (T).

6. Apparatus according to claim 5, **characterized in that** the cages (241) arranged one behind the other on each conveyor (2, 2') are driven at the same speed, in particular together.

7. Apparatus according to claims 5 or 6, **characterized in that** a plurality of rollers (240) are distributed over a circumference of the cage (241), wherein each roller (241) having an axis of rotation (D), which in the state **in that** said roller (240) is in contact with the base surface runs parallel to the transporting direction (T).

8. Apparatus according to any of the preceding claims, **characterized in that** omnidirectional rollers (24) are present, and **in that** the rollers (240) form a constituent part of the omnidirectional rollers (24).

9. Apparatus according to claim 8, **characterized in that** at least two omnidirectional rollers (24) are arranged one beside the other and form two rows, or wherein a double-row omnidirectional roller (24) is present, and **in that** the rollers (240) of each row are designed identically but are arranged such that they are turned through an angle in relation to one another.

10. Apparatus according to any of the claims 1 to 3 or 9, **characterized in that** the rollers are longitudinal rollers (25), which are arranged one behind the other in the transporting direction on a strand-like circulating pulling means (26), wherein the longitudinal rollers (25) being arranged such that they can be rotated and cannot be displaced in the transporting direction (T), wherein their axes of rotation (D) running parallel to the transporting direction, and wherein each conveyor (2, 2') having at least one such pulling means (26).

11. Apparatus according to any of the claims 1 to 10, **characterized in that** an aligning means for aligning the article in a precisely positioned manner is present in the region which follows the conveyors (2, 2') in the transporting direction (T) wherein the aligning means, in particular, having a stopping element (41) and/or being a lateral guide means (5).

## Revendications

1. Dispositif pour orienter un article (G) autour d'un axe (A) perpendiculaire au plan de dépôt, dans lequel il est prévu au moins deux transporteurs (2, 2'), les au moins deux transporteurs (2, 2') s'étendant dans une direction de transport (T) et étant placés au moins approximativement parallèlement et à distance l'un de l'autre, dans lequel au moins un premier des transporteurs (2, 2') peut être entraîné de façon à transporter au moins la zone de l'objet déposé sur lui dans la direction de transport (T), dans lequel le premier transporteur (2, 2') présente une vitesse de transport différente par rapport aux autres transporteurs longitudinaux et rotatifs (2, 2'), respectivement par rapport à l'autre transporteur longitudinal et rotatif (2, 2'), **caractérisé en ce que** les transporteurs (2, 2') présentent plusieurs rouleaux (240, 25) disposés dans le plan de dépôt pour déposer la face inférieure de l'objet (G), qui sont disposés les uns derrière les autres individuellement ou en groupes dans la direction de transport (T), dans lequel chacun des rouleaux (240, 25) présente un axe de rotation (D), qui est au moins approximativement parallèle à la direction de transport (T) au moins dans un état de ce rouleau (240, 25) en contact avec la face inférieure.

2. Dispositif selon la revendication 1, **caractérisé en ce que** les rouleaux (240, 25) présentent par rapport au plan de dépôt des coefficients de frottement qui dépendent de la direction, dans lequel ces coefficients de frottement sont en particulier plus élevés dans la direction de transport (T) que ceux présentés dans une direction (S) perpendiculaire à celle-ci, qui est située dans le plan de dépôt.

3. Dispositif selon la revendication 1, **caractérisé en ce qu'**au moins un deuxième des transporteurs (2, 2') peut être entraîné, dans lequel celui-ci présente une vitesse de transport différente du premier transporteur (2, 2').

4. Dispositif selon l'une quelconque des revendications précédentes, **caractérisé en ce que** les rouleaux (240) sont disposés individuellement ou en groupes dans des cages (241) et **en ce que** les cages (241) présentent des axes de rotation (K) qui sont disposés dans une direction au moins approximativement perpendiculaire à la direction de transport (T).

5. Dispositif selon la revendication 4, **caractérisé en ce que** chaque transporteur (2, 2') comporte plusieurs cages (241), dans lequel les cages (241) de chacun des transporteurs (2, 2') sont disposées individuellement ou par paires les unes derrière les autres dans la direction de transport (T).

6. Dispositif selon la revendication 5, **caractérisé en ce que** les cages (241) de chaque transporteur (2, 2') disposées les unes derrière les autres sont entraînées avec la même vitesse, notamment ensemble.

7. Dispositif selon l'une quelconque des revendications 5 ou 6, **caractérisé en ce que** plusieurs rouleaux (240) sont disposés de façon répartie sur un pourtour de la cage (241), dans lequel chaque rouleau (240) présente un axe de rotation (D) qui, dans l'état où ce rouleau (240) touche la face inférieure, est parallèle à la direction de transport (T).

8. Dispositif selon l'une quelconque des revendications précédentes, **caractérisé en ce qu'**il comprend des rouleaux multidirectionnels (24) et **en ce que** les rouleaux (240) font partie des rouleaux multidirectionnels (24).

9. Dispositif selon la revendication 8, **caractérisé en ce qu'**au moins deux rouleaux multidirectionnels (24) sont disposés l'un à côté de l'autre et forment deux rangées, respectivement **en ce qu'**il comprend un rouleau multidirectionnel à deux rangées (24), et **en ce que** les rouleaux (240) de chaque rangée sont identiques, mais sont tournés d'un certain angle les uns par rapport aux autres.

10. Dispositif selon l'une quelconque des revendications 1 à 3 ou 9, **caractérisé en ce que** les rouleaux sont des rouleaux longitudinaux (25), qui sont disposés les uns derrière les autres dans la direction de transport sur un moyen de traction continu en forme de bande (26), dans lequel les rouleaux longitudinaux (25) peuvent tourner et ne peuvent pas se déplacer sur le moyen de traction (26), dans lequel leurs axes de rotation (D) sont parallèles à la direction de transport et dans lequel chaque transporteur (2, 2') présente au moins un tel moyen de traction (26).

11. Dispositif selon l'une quelconque des revendications 1 à 10, **caractérisé en ce qu'**il y a, dans la région suivant les transporteurs (2, 2') dans la direction de transport (T), un moyen d'orientation pour orienter l'objet en position exacte, dans lequel le moyen d'orientation présente en particulier un élément de butée (41) et/ou est un moyen de guidage latéral (5).
